Europäisches Patentamt

European Patent Office

Office européen des brevets

(19)

(11) Publication number: **0 034 032**
**B1**

(12)

# EUROPEAN PATENT SPECIFICATION

(45) Date of publication of patent specification: **23.07.86**

(51) Int. Cl.⁴: **B 60 P 1/16,** B 60 P 1/28

(21) Application number: **81300426.4**

(22) Date of filing: **02.02.81**

(54) Side-dumping, material-hauling conveyance.

(30) Priority: **04.02.80 US 118207**

(43) Date of publication of application:
**19.08.81 Bulletin 81/33**

(45) Publication of the grant of the patent:
**23.07.86 Bulletin 86/30**

(84) Designated Contracting States:
**DE FR GB NL SE**

(56) References cited:
FR-A-1 180 063
US-A-2 023 700
US-A-2 194 068
US-A-2 513 658
US-A-2 603 531
US-A-2 844 616
US-A-2 848 275
US-A-3 101 974
US-A-3 240 164
US-A-3 316 019
US-A-3 323 838

(73) Proprietor: **Bailey, Clarence Wayne**
**1632 Plumas-Arboga Road**
**Marysville California 95901 (US)**

(72) Inventor: **Bailey, Clarence Wayne**
**1632 Plumas-Arboga Road**
**Marysville California 95901 (US)**

(74) Representative: **Bayliss, Geoffrey Cyril et al**
**BOULT, WADE & TENNANT 27 Furnival Street**
**London EC4A 1PQ (GB)**

The file contains technical information
submitted after the application was filed and
not included in this specification

Courier Press, Leamington Spa, England.

## Description

This invention relates, in general, to material-hauling conveyances and, in particular, to material-hauling conveyances having a side-dumping capability.

The trucking industry standard for large payload hauling of heavy materials such as rock, rip rap, and aggregates of all sizes has been the frameless end dump trailer first introduced by Bailey Engineering and Manufacturing Company over ten years ago. A variation of the Bailey frameless end dump trailer is shown in U.S. Patent 3,844,616. The frameless construction of this type of trailer greatly reduced the tare weight of the trailer, and thus enabled the hauling of a larger payload for the same gross vehicle weight.

While the frameless end dump trailer performs in a generally satisfactory manner for hauling heavy material useful in building roads, dams, levees and the like, it is sometimes disadvantageous to be required to dump the payload to the rear of the trailer when the material then has to be spread or relocated to another place such as the side of an earthen dam or levee or into a trench beside the roadway.

Under such conditions, it would be preferable to have a hauling conveyance with a large payload capacity which is capable of dumping the load to the side of the vehicle.

Another somewhat frequently encountered disadvantage of the frameless end dump trailer is the inability of the trailer to be used in work on narrow curving road beds because the wheels on the trailer do not track the truck wheels. Thus, it is often necessary to dump the payload out of the truck and use a more maneuverable conveyance to cart the material to its ultimate destination. This often wastes material, adds substantial cost to the project, and delays the completion of the project.

The trucking industry has recognized to some extent the need for a side-dumping, material-hauling conveyance. Some of the equipment which has heretofore been designed carries the load between the rear truck tires and trailer tires to provide stability while dumping, i.e., to prevent overturning the tractor and trailer while dumping to the side. This approach is exemplified in Gustafson U.S. Patent 2,693,531 and Armington U.S. Patent 2,848,275. The trailers illustrated in these patents are capable of dumping selectively to either side, but are intended for offroad use only and for carrying small payloads over short distances.

Other side-dumping trailers have been designed with over-the-wheels bed positions, but they employ heavy chassis and bed construction, and use side doors on the bed to enable the bed to reach a sufficient angle to the horizontal to dump all the load without having the center of gravity of the loaded trailer go over and beyond the pivot point of the bed. This type of equipment is exemplified in Flowers U.S. Patents 3,240,164 and 3,316,019. While this equipment is capable of selectively dumping the load to either side, the weight of the hauling bed and chassis reduces the gross payload capacity. Furthermore, the side door mechanisms add substantially to the complexity and cost of the equipment. U.S. 2,194,068 also shows a side-dumping trailer in accordance with the precharacterising part of claim 1. The trailer has a heavy bed and chassis construction, however. Opening side doors are avoided by providing only shallow inclined sides for the bed which thereby restrict the payload which can be carried.

FR—A—1,180,063 illustrates an electrically propelled load-carrying vehicle running on pneumatic tyres and having a side tipping skip intended for shuttle operation, that is travelling in one or other direction without the need to be turned round. Power for the vehicle is derived from overhead cable through pick-up arms at the end of the vehicle. The overall height of the vehicle is restricted by the available height below the power cables and the skip is disposed in a well formed inner-chassis between the front and rear wheels. In order that the vehicle can be driven in either direction, cabs are provided at both ends of the vehicle each having its own electric motor for driving the wheels at that end of the vehicle. The tipping arrangement for the skip is constructed to enable the skip to be tipped initially without raising the skip to enable the skip to clear the overhead power supply line and to facilitate discharge of the material from the skip, the skip has sidewalls which are automatically angled downwardly as the skip is tipped to facilitate discharge of material from the skip. Thus the teaching in the specification is primarily concerned with a vehicle which can operate within the constraint of a closely spaced overhead power supply line and is capable of being driven in either direction other than maximising the payload carrying capacity within a particular vehicle frame.

Trucco et al. U.S. Patent No, 3,323,838 also disclosures a side dump vehicle having the hauling beds mounted on a chassis over the wheels, but uses two separate beds simultaneously dumping to opposite sides to prevent overturning. Furthermore, the beds each have one shallow side in order to achieve a sufficient dumping angle without taking the centre of gravity of the loaded bed over the pivot point. This bed profile, along with the construction of the bed and the weight of the chassis, limits the payload capacity of the vehicle. The requirements to dump simultaneously to both sides could be highly disadvantageous in some projects where the payload needs to be located only on one side of the vehicle, such as when a trench on one side of the vehicle is to be filled.

It is an object of this invention to provide a material-hauling conveyance having both a larger payload capacity than the frameless end dump trailer and a dual side-dumping capability whilst avoiding heavy bed and chassis constructions and the complexity of side opening door mechanisms for the bed.

It is a further object of this invention to provide a material-hauling trailer having a side-dumping capability and improved tracking capability.

The invention provides a material hauling conveyance having a dual side-dumping capability, and including a material containing bed having a floor portion, outwardly inclined fixed side walls and front and rear wall portions and being devoid of opening side walls, conveyance means for transporting said bed including at least a pair of rear wheels and a pair of front wheels and a chassis assembly mounted on said wheels and having front and rear bed support assemblies to receive and support the bed on the chassis with the bed extending over both front and rear wheels on which the chassis assembly is mounted; at least a pair of hinge-mounting means located on opposite sides of said bed for enabling said bed to be tilted selectively to one or other side of the chassis around the rotation axis provided by the hinge-mounting means to dump material from the bed; and hoisting means mounted on said chassis assembly at the centre line of the bed for raising the bed to tilt it about a selected one of said hinge-mounting means for dumping material on the bed; characterised in that said chassis assembly includes separate front and rear bed support assemblies to accommodate certain movement with respect to each other whilst maintaining support of the bed independently of said hinge-mounting means and said hoisting means; in that said material containing bed is a frameless construction, the floor and side wall portions of said bed comprising sheet material extending continuously between the front and rear wall portions; and in that hoisting means raises and tilts the bed to positions to one or other side of the chassis in which the centre of gravity of the bed lies beyond the hinge-mounting means with respect to the centre line of the chassis to effect dumping of material from the bed.

In a preferred embodiment of the invention, the conveyance means is a dolly-type trailer having a chassis comprising separate front and rear bunk assemblies adapted to be mounted in a horizontally rotatable fashion on the frame of a truck tractor and the bolster assembly on the frame of the trailer, respectively. The dolly-type trailer further includes a reach extending forward from the trailer frame and having a sliding pole compensator mounted therein which is adapted to be hitched to the rear of the frame of the truck tractor. In this embodiment, the bed has a pair of top hats, each mounted on the bottom one of the end wall portions thereof, and the front and rear bunk assemblies each have a bottom hat shaped to engage in mating fashion with one of the top hats. Furthermore, the hinge-mounting means is positioned on each end of each of the bunk assemblies, whereby the bed is suspended between the front and rear bunk assemblies on the top hats, and the trailer is pulled by the bed and steered by the reach and compensator assembly to provide a tracking-cornering action between the truck tractor wheels and the trailer wheels.

This type of conveyance means further enables the truck tractor and trailer combination to be jackknifed to the side opposite the side to be dumped toward to increase the safety factor of dumping.

The dual side-dumping conveyance of this invention has a number of advantages over both the frameless rear end dump vehicle previously described and the prior art side-dumping conveyances discussed above. The special design of the profile of the bed enables the center of gravity of the loaded bed to be carried over the pivot point such that the load can be completely dumped without requiring side gates which add to the complexity and cost of the prior art equipment. Because of this side-dumping capability, the conveyance is capable of dumping to either side while stationary or while travelling slowly in order to distribute the load along the side of the truck. This is particularly advantageous when dumping into a trench and avoids the wasting of material either by dumping too much material in one location or dumping part of the material on the ground. It is especially advantageous when dumping into a trench where traffic would be blocked by a rear dump vehicle.

The use of a frameless bed mounted on the dolly-type trailer enables the attainment of both a larger, legal payload due to the increased wheel base made possible by the side-dumping capability and improved maneuverability of the trailer and truck combination due to the improved tracking. This enables the side-dumping conveyance of this invention to be utilized in areas which would be otherwise inaccessible to the end-dumping equipment. When utilized in a jackknifed dump position, the contents of the bed may be dumped to the side on level ground and thereafter the truck and trailer can back-up and then pull around the pile. This avoids driving the tires over the dumped material and thus precludes damaging the tires getting the tires dirty or stuck in the material, or contaminating the material itself.

Other advantages of this invention will be apparent from a consideration of the following detailed description taken in conjunction with the accompanying drawings.

Fig. 1 is a partly exploded side view of the dual side-dumping tractor and trailer combination in accordance with this invention.

Fig. 2 is a close-up side view of the bunk assembly and releasable hinge-mounting means for a side-dumping trailer in accordance with this invention.

Fig. 3 is a partly cut-away view of the releasable hinge-mounting means in accordance with this invention.

Fig. 4 is a rear view of the dual side-dumping trailer arrangement in accordance with this invention with the bed in its normal hauling position.

Fig. 5 is a rear view of the dual side-dumping trailer arrangement of this invention showing the bed in a dump position.

Fig. 6 is a view of the truck and trailer combination taken along the lines 6—6 in Fig. 1 showing the truck and trailer aligned with each other going down a straight road.

Fig. 7 shows the truck and trailer combination in a cornering or jackknifed position.

Fig. 8 is a partial cross-section view taken along the lines 8—8 in Fig. 4.

Fig. 9 is a side view of a alternate fifth wheel mounting arrangement useful in connection with the invention.

Fig. 10 is a top view of the fifth wheel mounting arrangement taken along the line 10—10 in Fig. 9.

Fig. 11 is a section view through the profile of the bed taken along the lines 11—11 in Fig. 1 showing the respective dimensions which determine an optimum bed profile and hinge pin location.

Fig. 12 illustrates an alternative chassis and hoist mounting arrangement.

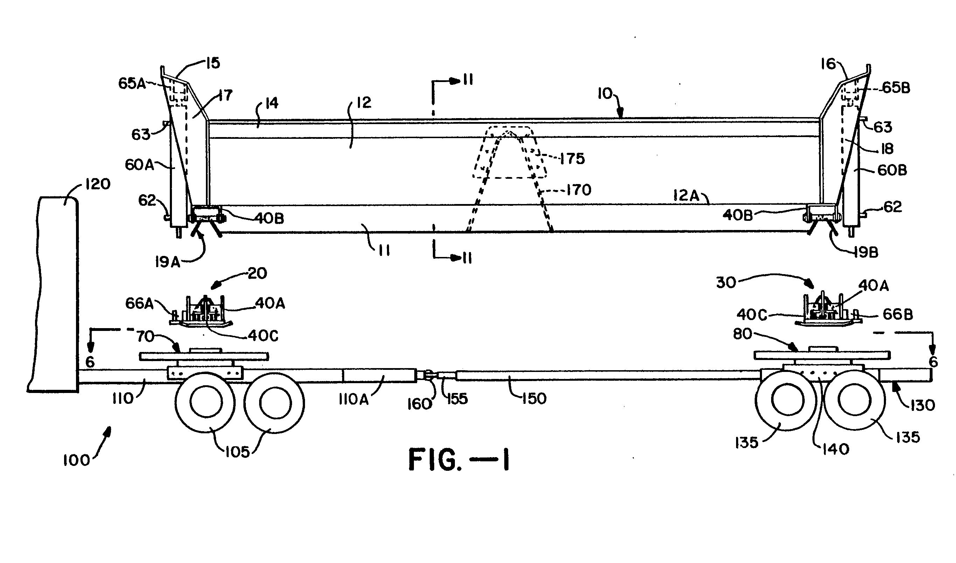

Fig. 1 is a partly exploded view of the major elements of a side-dumping, material-hauling conveyance in accordance with a preferred embodiment of this invention. As illustrated, the main components are a material-hauling bed 10, front and rear bunk assemblies 20 and 30, and truck and trailer bolster assemblies 70 and 80 which together form part of a chassis means on which the front and rear bunk assemblies 20 and 30 are mounted. The truck bolster assembly 70 is mounted on the frame 110 of a tractor truck 100 and extends over the truck wheels 105.

The trailer bolster assembly 80 is mounted on the frame 140 of a dolly-type trailer 130 and is mounted over the trailer wheels 135. As shown, a stinger section 110A on the truck frame 110 extends beyond the rear truck wheels. Reach 150 extends forward from trailer frame 140 toward the stinger 110A on the truck and contains a sliding pole compensator 155 which is hitched in a normal fashion via a hitch 160 to the rear of stinger 110A.

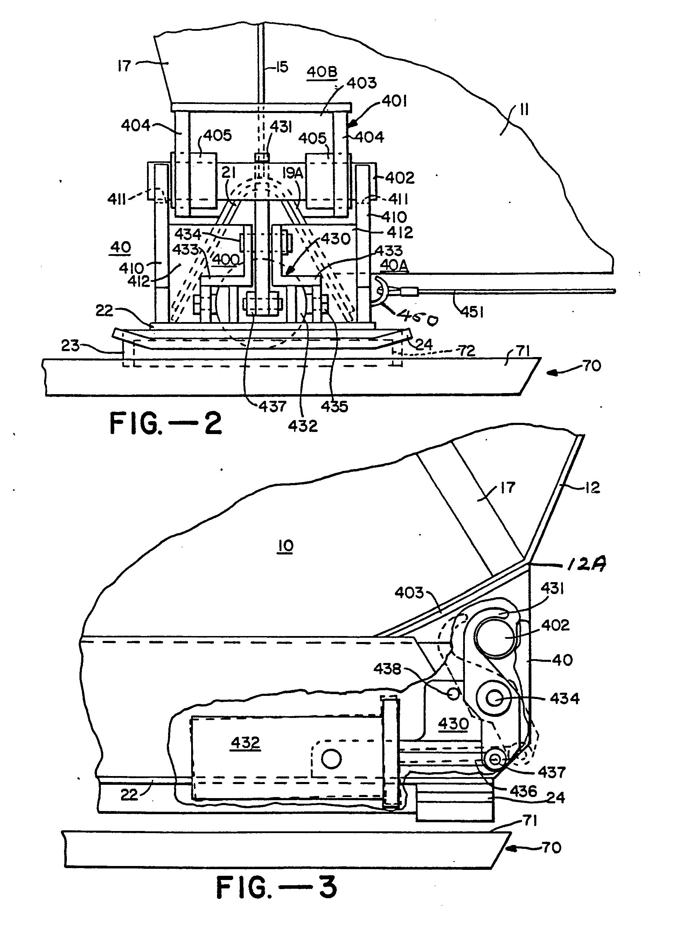

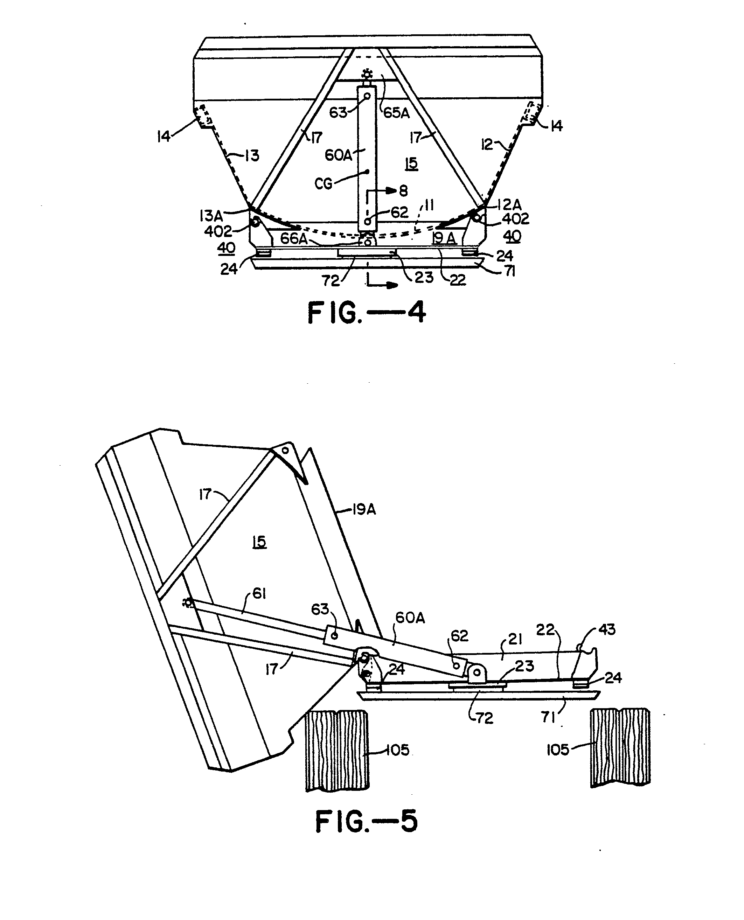

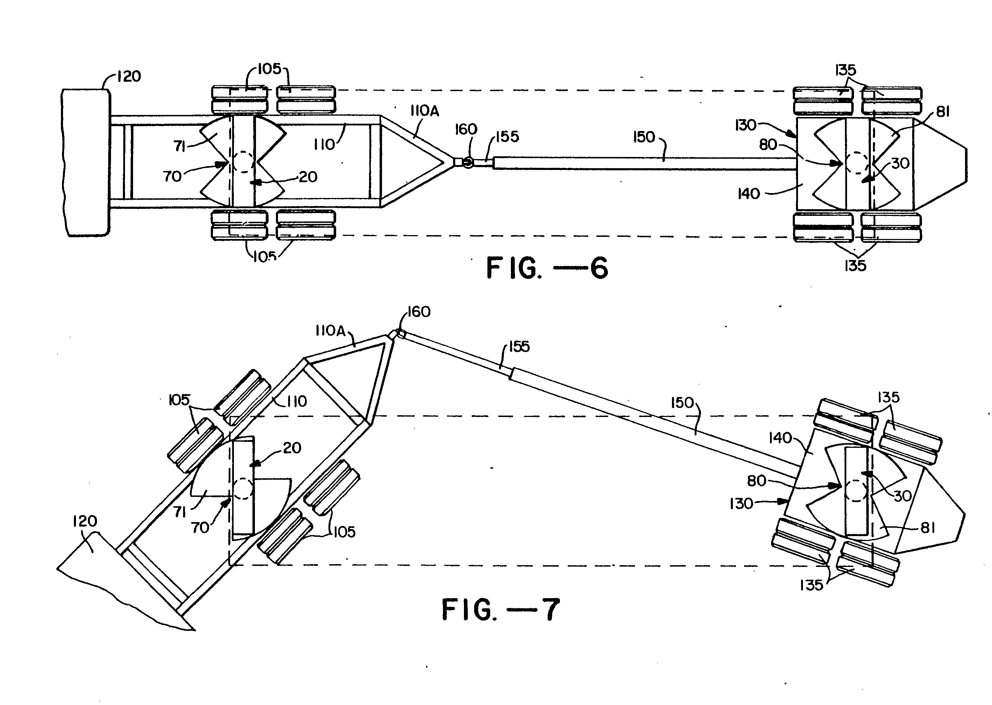

The major features of bed 10 can best be seen by considering the side view in Fig. 1 together with the end profile shown in dotted lines in Fig. 4. As illustrated, bed 10 consists essentially of a floor portion 11, a pair of side wall portions 12 and 13, a pair of top rails 14, a front headboard 15, and a rear headboard 16. As can best be seen in Fig. 4, the floor portion 11 of bed 10 comprises a section of an ellipse which meets the side wall portions 12 and 13 at the break lines 12A and 13A. The top rails 14 consist of box-like structures which are fastened in any suitable fashion, such as welding, to the tops of side wall portions 12 and 13. Front headboard 15 and rear headboard 16 form end wall portions of bed 10 and are mounted on the ends of the floor and side wall portions of bed 10 in an appropriate manner such as by welding. Preferably, the floor portion 11 and the two side wall portions 12 and 13 of bed 10 are formed of a continuous sheet of "T-1" steel or its equivalent, with the total length of the bed 10 being made up of separate sections of steel plates which are first formed to the bed profile and then welded together.

As can be seen, bed 10 is a frameless bed, that is, there are no supporting structural elements for the floor and side walls. The elliptical floor portion 11 together with the break lines 12A and 13A where the side wall portions 12 and 13 meet the elliptical floor provide a bed which has a high degree of strength, such that it will not buckle under loading, yet is able to twist and flex sufficiently to prevent cracking of the bed. The specific profile and dimensions of the bed 10 will be discussed later in connection with the side-dumping feature where it will be explained how the bed profile, together with other aspects of the design, enables the frameless bed to be completely dumped without overturning the truck and trailer combination.

As shown in Figs. 1 and 4, front headboard braces 17 and rear headboard braces 18 are provided to brace the top of front headboard 15 and rear headboard 16, where the hoisting means 60A and 60B are rotatably mounted via hoist mounting bracket and pin assemblies 65A and 65B. Hoisting means 60A and 60B are rotatably mounted to bunk assemblies 20 and 30 via mounting bracket and pin assemblies 66A and 66B.

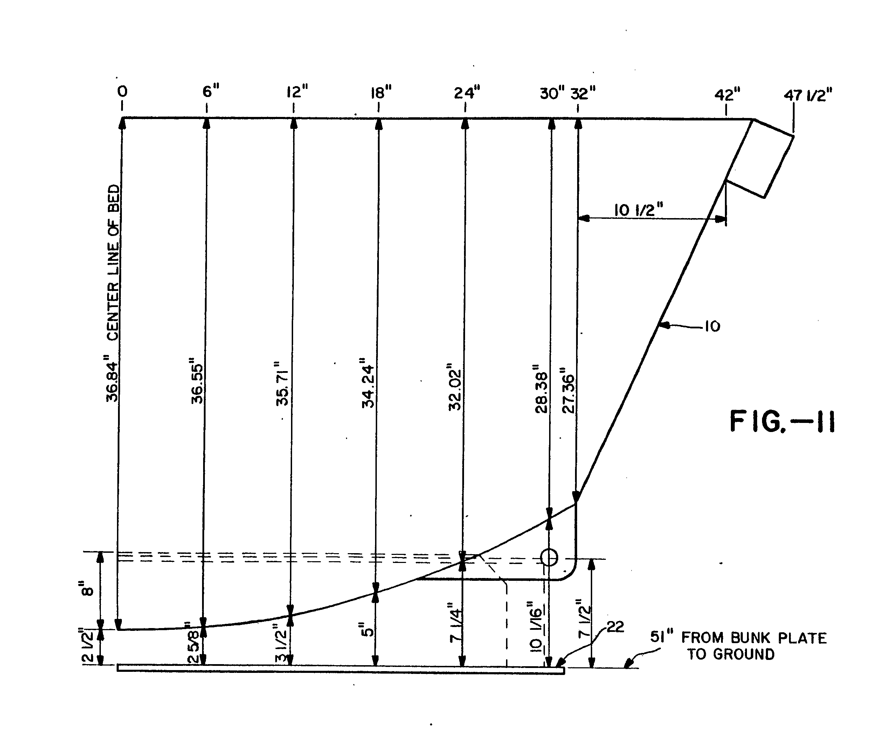

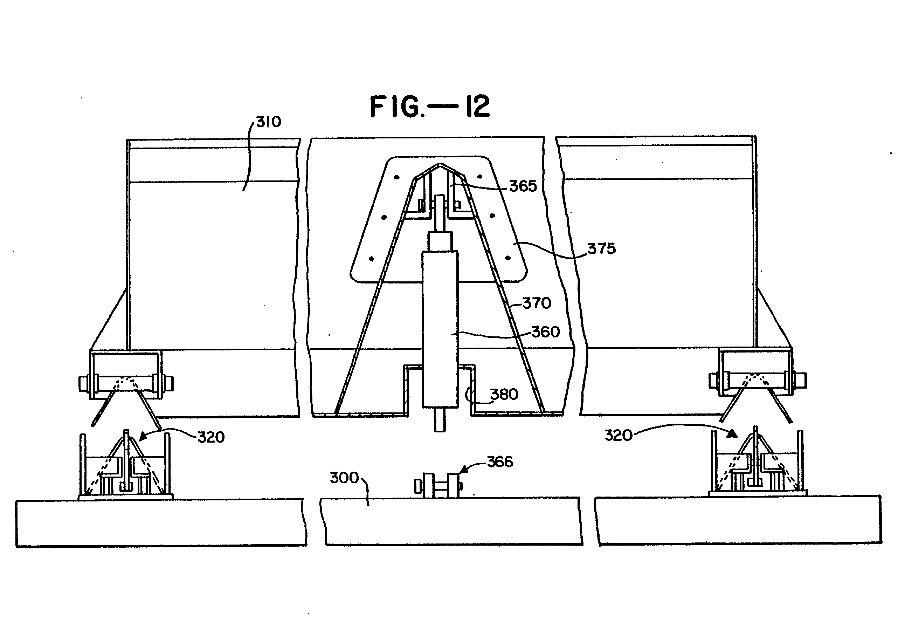

As shown in Fig. 1, a front top hat 19A is mounted on bed 10 at the bottom of front headboard 15 and a rear top hat 19B is mounted at the bottom of rear headboard 16. These two top hats 19A and 19B are utilized to suspend bed 10 between the front bunk assembly 20 and the rear bunk assembly 30. Referring momentarily to Fig. 8, it is seen how the top hats 19A and 19B rest on mating bottom hats which form part of the front and rear bunk assemblies 20 and 30. Since the front and rear bunk assemblies are identical, only one need be considered in connection with Fig. 8. As shown in Fig. 8, the front bunk assembly 20 consists essentially of a bottom hat 21 and a bunk plate 22 on which the bottom hat 21 is supported and fastened by any appropriate means such as welding. Top hat 19A is fastened (e.g., by welding) to the front headboard 15 of bed 10 and the floor portion 11 of bed 10. Both top hat 19A and bottom hat 21 have a generally inverted V shape with a rounded top portion. It can thus be seen that the mating top hat 19A and bottom hat 21A provide for the suspension of bed 10 between the bunk assemblies 20 and 30. Fig. 8 also shows the saucer and hub mounting arrangement whereby front bunk assembly 20 is mounted in a rotatable fashion on truck bolster assembly 70. An identical saucer and hub arrangement is provided for mounting rear bunk assembly 30 on trailer bolster assembly 80, as shown in Fig. 1. This mounting arrangement, as shown in Fig. 8, includes a hub 71 which is mounted on truck bolster assembly 70 and a saucer 23 which is mounted on the bottom of bunk plate 22. A bolt and nut arrangement 72 is provided to retain saucer 23 and hub 71 together. Saucer 23 and hub 71 have complementary circumferential grooves which enable the hub 71 to pull the saucer 23 and the bunk assembly affixed thereto while maintaining a rotatable mounting arrangement between bunk assembly 20 and bolster assembly 70. As will later be seen, this rotatable mounting arrangement is an important aspect of the overall preferred embodiment of this invention employing a dolly-type trailer such that tracking-type cornering action of the truck and trailer is achieved.

Referring back to Fig. 1 again, it can be seen that releasable hinge-mounting means comprises a hinge saddle assembly 40A, a hinge pin assembly 40B, and a latch assembly 40C, are provided on both ends of each of the front and rear bunk assemblies 20 and 30. These releasable hinge-mounting means enable the bed 10 to be selectively tilted to either side in order to dump its contents next to the truck and trailer combination. The releasable hinge-mounting means cooperate with the hoisting means 60A and 60B in order to accomplish this selective dual side-dumping capability.

The detailed structure of the releasable hinge-mounting means is depicted in Fig. 2 and Fig. 3. As shown in Figs. 2 and 3 hinge pin assembly 40B preferably consists of a hinge pin bracket 401 and a hinge pin 402. The hinge pin bracket 401 mounts the hinge pin 402 parallel to the floor portion 11 of bed 10. The axis of hinge pin 402 is substantially intersected by the plane of the side wall portion 12 of bed 10 and is otherwise located near the break line 12A. This places the axis of rotation at a point of strength and reduces the tendency to work the metal structure in this area which might ultimately produce cracks and structural failure.

In addition, it will be noted that the axis or center line of hinge pin 402 coincides precisely with the point where the upper portion of the bottom surface of top hat 19A mates with the top portion of the top surface of bottom hat 21. This location is important because as the bed 10 starts to rotate on hinge pin 402, it is desirable that the weight of bed 10 be rapidly transferred to the hinge saddle assembly rather than tending initially to rest on the edge of the top and bottom hat.

Hinge pin bracket 401 consists of a base member 403 which is mounted in appropriate fashion to the floor portion 11 of bed 10. This mounting can be accomplished by welding or other appropriate means. One half of the base 403 extends beyond the floor portion of the bed and the front headboard 15 and provides a bottom support for the headboard brace 17. A pair of arms 404 are mounted on base 403 and extend vertically downward. Arms 404 have bushings 405 mounted in apertures (not shown) formed in arms 404. Hinge pin 402 is actually received in the bushings 405 such that hinge bracket 401 rotates with respect to hinge pin 402 when the bed 10 is tilting around the hinge pin.

Hinge saddle assembly 40A essentially consists of a pair of saddle arms 410 which are fastened in appropriate fashion such as by welding to the top of bunk plate 22. Each of the hinge saddle arms 410 has a cradle portion 411 which receives the hinge pin 402. A pair of hinge saddle gussets 412 extend between the inner surfaces of the saddle arms 410 and the latch mounting bracket 430. These gussets are fastened to the hinge saddle arms 410 and the latch bracket 430 by an appropriate means, such as welding, and are also fastened by appropriate means, such as welding, to the end of bottom hat 21. In this manner, the hinge saddle arms are well supported on the bunk plate 22 and can readily withstand one-half of the weight of bed 10 and a load therein when the bed is rotating on hinge pin 402.

Latch assembly 40C consists essentially of a latch bracket 430, a latch hook 431, and an air-operated spring brake 432. More specifically, latch bracket 430 consists of two support arms 433 which are mounted in an appropriate fashion, such as welding on the top of bunk plate 22. Latch hook 431 is rotatably mounted on latch bracket 430 via latch pin 434. The air-operated spring brake 432 is rotatably mounted to latch bracket 430 via any suitable mounting arrangement designated 435 in Fig. 2. The arm 436 of spring brake 432 is fastened to the bottom of latch hook 431 via a mounting bracket 437 and is operative to move the latch hook 431 between a latched position shown in solid lines in Fig. 3 and an unlatched position shown in dotted lines in Fig. 3. A stop pin 438 is mounted behind the latch hook to limit the backward travel of the latch hook. As can be seen, the rotational mounting of spring brake 432 enables it to rotate slightly as it operates to rotate the latch hook 431. The latched position of latch hook 431 is such that the hook on the upper end thereof surrounds the hinge pin 402 and prevents bed 10 from raising vertically. On the other hand, when latch hook 431 is in the unlatched (dotted line) position shown in Fig. 3, the illustrated corner of bed 10 can raise up vertically. It is this selective latching feature which enables the bed 10 to be selectively tilted by the hoist means shown in Fig. 1 to one side or the other.

As shown in Fig. 2, a hook 450 is mounted on one side of saddle arm 410 in order to attach a loop on a cable 451 to the bunk assembly 20. The hinge saddle arm on the rear bunk assembly would have a similar hook to attach the other end of the cable 451. These cables may be utilized when the dual side-dumping trailer is dumping to the other side, while the truck and trailer are moving in a straight line so that the bunk assemblies will remain substantially in alignment and the top hats mounted on the bottom of the headboards of the bed will come down in a substantially mating fashion with the bottom hats on the bunk assemblies. If such a cable arrangement were not utilized to keep the bunk assemblies lined up, the jostling of the bunk assemblies while dumping might produce a substantial misalignment which might, in turn, cause one of the top hats to come down substantially misaligned with the corresponding bottom hat. This might damage either the top hat or the bottom hat since these two elements are capable of providing self-alignment only within a certain range of tolerance in the bunk positions.

Having described the releasable hinge mounting means which are provided on the four corners of the floor of bed 10 and the ends of the bunk assemblies 20 and 30, it will be readily apparent how the selective dual side-dumping capability is achieved with the apparatus of this invention. Fig. 4 shows bed 10 with the top hat 19A resting on the bottom hat in a normal load carrying position. This is the position that the bed would be in while the truck and trailer are going down the highway. At this time, all of the latches on the releasable hinge-mounting arrangements 40 are in a latched position such that the bed 10 is mechanically restrained from lifting off of the bunk assemblies 20 and 30. It will be noted that there is a slight amount of clearance between the bottom surface of the top rub plates 24 which are fastened to the underside of the bunk plate 22 and the top surface of the bottom rub plate 71 which is part of the bolster assembly. While going straight down the highway, the weight of the load is carried on the saucer 23 and the hub 72. However, when the truck and trailer combination is cornering and the bed and bunk assemblies lean to one side, one of the combinations of upper rub plates and lower rub plates will be in contact with each other and part of the weight of the load will be transferred to the bolster assembly through the rub plates.

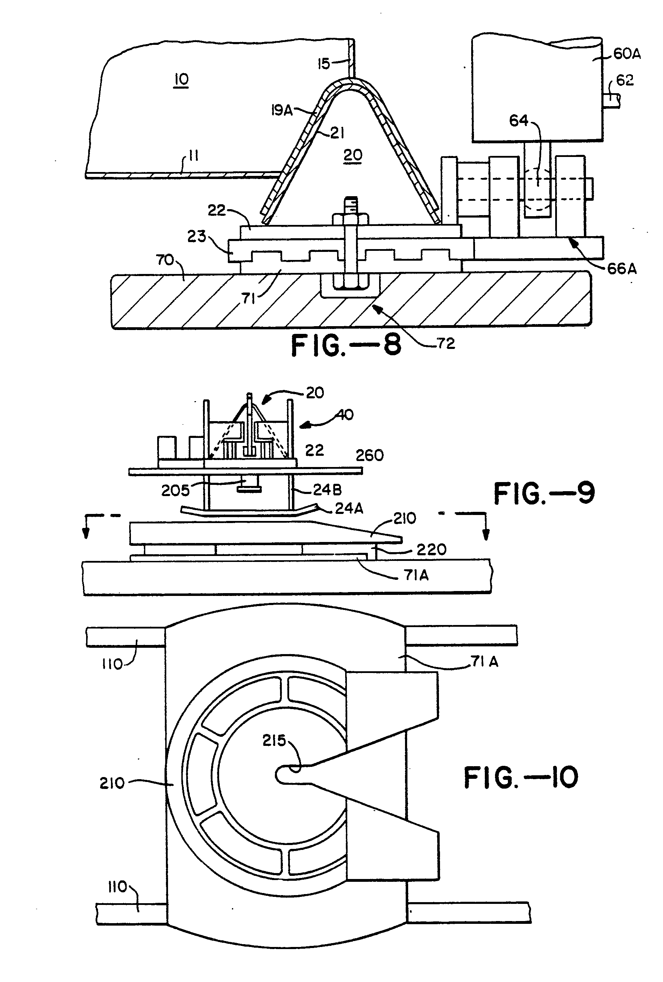

Consider now the operation of the apparatus to dump the bed selectively to one side. To dump the bed to the left, as shown in Fig. 5, the latch hooks 431 in the hinge-mounting assemblies 40 on the right side of the bed would be shifted to the unlatched position by supplying air to the spring brake devices associated with these latch hooks. Once this has been accomplished, hydraulic fluid is supplied to the lower input port 62 of the double-acting hydraulic hoist 60A and to the corresponding lower port on the hydraulic hoist 60B on the other end of the bed. Since the weight of the load in the bed may be unevenly distributed between the front section and the rear section of the bed, it is necessary to utilize a flow divider (not shown) in the hydraulic lines (not shown) to the lower input ports 62 of the hoists 60A and 60B so that the amount of hydraulic fluid going to each hoist will be the same and both ends of the bed will be lifted the same distance regardless of the weight distribution. If this were not done, an uneven weight distribution in the bed could cause the bed to twist severely as one side is raised further than the other due to the differential pressure on the pistons of the two hoists.

As hydraulic fluid is supplied to the lower ports 62, the pistons 61 gradually push out. Initially, this tends to raise both sides of the bed 10. However, since the left-hand side is latched and the right-hand side is unlatched, the right side of the bed will go up and the left side of the bed will remain in the hinge-mounting means. As shown in Figs. 2 and 4, the hinge pin 402 is not normally in contact with the bottom of the cradle portion of the hinge saddle arms. However, when the right-hand side of bed 10 is lifted up by the hoist, the pins associated with the left-hand hinge means drop into the cradle portion of the saddle arms, and at this point, the hinge bracket with the bushings attached thereto begins to rotate along with the bed on hinge pin 402. At this point as the bed gradually rotates around the left rotation axis, most of the weight of the bed comes to rest on the hinge saddle brackets and is transferred through the bunk plate 22 and the upper rub plate 24 to the bolster assembly 70.

As the hoist tilts the bed 10 further and further over the pivot axis on the left-hand side, the initial center of gravity of the bed and load (labeled CG) passes vertically over the pivot axis, and at some point, a portion of the load will begin to dump out of bed 10. To completely dump the load, the center of gravity CG which is approximately seventeen inches above the bottom of the bed at the start for a full load, passes beyond the pivot axis of the hinge-mounting means. Tilting of the bed around the axis of rotation of the hinge-mounting means continues until the left side portion 13 of the bed makes an angle of approximately forty-five degrees to the horizontal. At this angle, virtually all types of material will completely slide out of the bed and the contents of the bed may be completely dumped. At this point, however, the center of gravity of the partially dumped bed has passed well over the pivot axis of the hinge-mounting means. It will be appreciated that without careful design of the bed profile and optimized location of the pivoting axis of the bed on the hinge-mounting means, the tilting of the bed with the center of gravity of the bed and load passing well beyond the pivot point would be expected to overturn the truck and trailer together with the bed. It has been discovered, however, that by utilizing a low profile frameless bed of the type shown and by properly locating the pivot point of the bed, i.e., by properly locating the hinge-mounting means, the bed can be completely dumped with the dumping side wall portion of the bed achieving a forty-five degree dump angle without running into the tires on the truck or trailer, and without overturning with the truck and trailer on level ground.

Because the center of gravity of the bed after the load has been dumped is still past the pivot point of the hinge-mounting means, the hoist 60A must be a double-acting hoist in order to be able to pull bed 10 back to its normal hauling position. To do this, hydraulic fluid is pumped into the upper port 63 on the hoists and forced out of the lower port 62 such that the piston 61 is forced back into the hoist and the bed 10 rotates back toward the normal hauling position shown in Fig. 4. The inverted V-shaped design of the top hat and bottom hat provides a self-aligning feature for the bed on the bunk assembly. Thus, under normal conditions, the top hat 19A will come down to rest in an aligned position on bottom hat 21. Under certain circumstances, the alignment may not be sufficient for the hinge pin on the non-dumping side of the bed to come to rest in the hinge saddle. When this occurs, the trailer brakes may be utilized to jostle the bed back and forth slightly to seat the hinge pin in the saddle. After the hinge pin is completely seated in the saddle, the operator can remove the air to the air-operated spring brakes on the right-hand side of the front and rear bunk assemblies, and the latch hooks will again engage the hinge pin and retain the bed securely on the bunk assemblies. To dump the bed 10 in the other direction the sequence would be just the opposite of that given above.

Figs. 6 and 7 show the tracking-cornering action of the dual side-dumping conveyance of this invention when a dolly-type trailer is utilized. Fig. 6 shows the truck and trailer combination going in a straight line such that the truck wheels 105 and the trailer wheels 135 are lined up and the reach 150 extending forward from the trailer frame 140 is substantially lined up with the center line of the truck 100. Fig. 6 shows the stinger 110A on the rear of the truck as an A-frame structure, which is preferable to minimize the overall road width occupied by the truck and trailer combination when cornering. The stinger 110A may be mounted to the frame 110 of the truck in a removable fashion if it is desired that the truck be available to be used for other hauling purposes.

Fig. 7 shows the truck and trailer combination when the truck 100 is either cornering or backing in a jackknifing position to maneuver the trailer. As can be seen in Fig. 7, the bed 10 which is shown in dotted outline may remain in a horizontal position while both the truck 100 and the trailer 130 are at a substantial angle. This is achieved by having the rotatable bunk assemblies mounted on the bolster assemblies of the truck and trailer. As the truck 100 turns, either for cornering or a backing type maneuver, the distance between the center pins of the saucer and hub arrangements on the bunk assemblies and bolster assemblies of the truck and trailer, respectively, remains the same. However, the stinger 110A of the truck pulls the reach 150 and sliding pole compensator 155 around to a location such that the truck frame and the reach and compensator make a triangle with the center line of the bed so that the wheels 135 on the dolly-type trailer 130 will tend to track the wheels 105 of the truck as the truck and trailer combination are cornering. Since the total length of the two sides of the triangle is greater than the hypotenuse which is the bed length, the sliding pole compensator 155 is pulled out of reach 150 as the truck 100 goes around a corner. It will thus be seen that it is actually the bed, suspended on the front and rear bunk assemblies which is pulling the trailer and the stinger 110A and the reach 150 with the sliding pole compensator 155 are merely steering the trailer 130 in a tracking fashion. The extent to which the trailer wheels follow in precisely the same track as the truck wheels can be adjusted by the relative distance between the front of the bed and the end of the stinger and the distance between the rear of the bed and the end of the reach. Generally, for purposes of stability, it is preferable for the trailer wheels not to track exactly but to track slightly inside the truck wheels. Because of the tracking-cornering action between the truck and the trailer, the overall conveyance utilizing the dolly-type trailer is considerably more maneuverable than a similar length truck and trailer combination utilizing a fixed set of trailer wheels and having only a pivot point on the bolster of the truck as in the normal kind of fifth wheel arrangement. This additional maneuverability can be highly significant in terms of permitting a longer bed and thus achieving a higher payload without sacrificing maneuverability and actually achieving a greater maneuverability of the overall conveyance at the higher payload.

Figs. 9 and 10 depict some of the details of an alternate fifth wheel type mounting arrangement for the rotational mounting of the front bunk assembly. Basically, the mounting arrangement shown is the standard fifth wheel type mounting arrangement involving an upper fifth wheel plate 200 and a lower fifth wheel plate 210. For purposes of use with this invention, the lower fifth wheel plate 210 is blocked with a blocking means 220 in order to retain it in a horizontal position on the truck frame 110. The bunk assembly 20A and the portion of the releasable hinge mounting means 40 provided thereon are mounted to the upper fifth wheel plate 200. The center line of the front bunk assembly 20 coincides with the center line of the kingpin 205. As is well known, the kingpin 205 is adapted to be received in a latching aperture mechanism 215 on the lower fifth wheel so that the kingpin and upper fifth wheel plate can rotate with respect to the lower fifth wheel plate 210. The bunk assembly 20A has a slightly different skid plate arrangement with the skid plates 24A being mounted on extending legs 24B. This arrangement is necessary since the top of the lower fifth wheel plate is typically higher off of the truck frame than the bolster assembly on the arrangement depicted in Fig. 1 and Fig. 8. Accordingly, the upper skid plate 24A must be extended substantially below the bunk plate 22 in order to be in a proper position with respect to the lower skid plate 71A.

For the fifth wheel mounting arrangement, the lower skid plate 71A preferably comprises the configuration shown in Fig. 10. The skid plates 71 shown on the bolster assemblies 70 and 80, respectively, in Fig. 6 and the skid plate configuration 71A shown in Fig. 10 are designed such that the upper and lower skid plates will have a substantially complete mating surface regardless of the angle of the respective bolster assemblies on the truck and trailer with respect to the bunk assemblies. As discussed in connection with Fig. 4, the weight of the bed is transferred via the skid plates to the bolster assembly or the truck frame while dumping to a particular side. Since the truck may be jackknifed while dumping, it is important that the upper skid plate rest completely on the lower skid plate to avoid loading just a portion of the upper skid plate. Fig. 11 is a dimensioned drawing of the contour of the bed 10, showing the actual location of the hinge pin and the dimensions with respect to the top and bottom hat and the distance from the bunk plate 22 to the ground. As can be seen, the overall height of the top of the bed above the ground is approximately ninety-six inches (2.44 metres). The depth of the bed at the center line is slightly over three feet 10.915 metres) and the total width of the bed at the top is slightly under eight feet (2.44 metres).

This bed profile or contour together with the hinge mounting arrangement was designed to meet the following requirements:

1. A bed capacity of twenty cubic yards (15.25 cubic metres) minimum.

2. A legal highway/bridge gross weight of forty tons (40.7 tonnes) maximum.

3. A legal highway width of eight feet (2.44 metres) maximum.

4. A dump angle of the bed side of forty-five degrees (0.785 radians) minimum.

5. Dumping to either side with a centre hoist.

6. A bed height of ninety-six (2.44 metres) inches maximum to accommodate most front loader devices.

7. A maximum safety factor of two against overturn of the truck and trailer under worst case conditions of attempting to dump a full bed of hardened concrete which will not leave the bed.

In order to minimize the tare weight of the bed, a frameless type cross section was selected for the bed. A curved elliptical floor section with an angle break of approximately sixty-six (0.875 radians) degrees between the floor section and the flat sides was selected to provide good structural strength for both lateral loading and longitudinal twisting. The bed length was essentially dictated by highway weight and bridge laws, which in California, for example, require thirty-six feet (11 metres) outer axle groups. Taking into account the trunion-to-axle dimensions, a minimum bed length of thirty-three feet (10.1 metres) was established.

Having established a general bed profile for optimum loading strength, the optimum location of the axis of the hinge pin must be determined. To achieve such an optimum location, several factors must be taken into account:

1. As the hinge pin axis position is moved towards the centre line of the vehicle, the bed must be raised higher above the wheels in order to be able to achieve the forty-five degree (0.785 radians) dump angle without interfering with the tires. This greatly increases the overturn torque on the truck and trailer while dumping a load and will reduce or eliminate the safety factor in dumping.

2. As the hinge pin position is moved outward from the center line of the vehicle, the pin can be in a lower position, but if the hinge axis is positioned too far out from the center line, the overturn torque again increases to an unsafe amount. In addition, the ninety-six inch (2.44 metres) legal width limit is a limiting factor on the movement of the hinge pin axis outwardly.

3. Another factor is the angle of the flat upper side of the bed. As the side angle approaches the vertical, the bed center of gravity must rotate further beyond the hinge pin axis to achieve the required dump angle for the side. Conversely, as the flat side angle becomes more horizontal, the capacity of the bed is severely reduced due to the ninety-six inch (2.44 metres) legal width constraint.

4. The best structural design from a strength standpoint is achieved by locating the dump pin center line very close to the break line between the elliptical floor section and the flat side section of the bed.

Taking all of these factors into consideration, the optimum bed profile and optimum hinge pin location can be determined by a careful trial and error approach utilizing calculations and scale modeling of the bed profile and pin location. It should, of course, be apparent that the difficulty of providing a sufficient safety factor in side dumping is reduced as the weight of the truck and trailer increases with respect to the weight of the bed and load. Utilizing the principles of this invention, it has been discovered that it is possible to design a high payload side-dumping vehicle which is capable of completely dumping the load by taking the center of gravity of the worst possible load over the pivoting axis of the hinge-mounting means without overturning the tractor and trailer. In the specific case of the preferred embodiment of this invention, the bed is designed to carry a payload of twenty-five tons (25.2 tonnes) with a weight of the empty bed itself being about three tonnes (3.05 tonnes). This leaves twelve tons (12.2 tonnes) for the weight of the truck and trailer itself. As can be seen the total weight of the bed and load is two-and-one-half times that of the truck and trailer. In spite of this, it has been possible to design a bed profile and hinge pin axis location which enables complete dumping of the bed with a safety factor of two under the worst load conditions. It should also be understood that the use of the dolly-type trailer with reach and sliding pole compensator arrangement enables the truck and trailer to be jackknifed to the side opposite the dumping side in order to further increase the safety factor in dumping a load from the bed. This is particularly useful where the material in the bed is to be dumped on ground which is not level and slopes down on the side of the truck and trailer on which the load is to be dumped. Consequently, the dolly-type trailer and truck combination enables the safe dumping of a load under virtually all conditions.

While certain design features and parameters have been discussed above in connection with a dual side-dumping bed and mounting arrangement and a dolly-type trailer and truck combination, it should be understood that various alternative arrangements are also possible. For example, as shown in Fig. 12, the bed 310 could be mounted on a flat bed truck chassis 300 instead of on a dolly-type trailer and truck combination. The chassis 300 could be either a flat bed truck chassis, a flat bed trailer chassis or a railroad car chassis. While the dual hoist arrange-

ment shown in Fig. 1 could be utilized on a flat bed chassis, it would be preferable, as shown in Fig. 12, to utilize a single telescoping hoist 360 mounted between the chassis 300 and the bed 310 within the center baffle 370 of the bed. This can be accomplished by way of a lower hoist mounting bracket 366 which rotatably mounts the hoist to the chassis and a upper hoist bracket 365 which rotatably mounts the piston of the hoist to the bed 310. A stress plate 375 may be utilized on each of the two side portions of bed 310 in order to aid in distributing the stress of the loaded bed along the side walls thereof. The hoist 360 would extend through an appropriately sized slot 380 cut into the floor of the bed at the center portion thereof in order to enable the hoist to pivot freely to the required position during dumping. In all other respects, the bunk assemblies and the releasable hinge mounting means could be identical to those shown in Figs. 1 through 3.

It should also be understood that, in the flat bed mounting arrangement shown in Fig. 12, it would further be possible to utilize a hoist which is positioned within a well in the chassis of the flat bed trailer or railroad car and has the piston attached to the bottom of the material-hauling bed.

It should also be apparent that, otherwise than in accordance with the present invention, the combination of the dolly-type trailer and truck arrangement could be utilized with any type of side dumping bed and hinge mounting arrangement, including other types of single or dual side-dumping arrangement and other types of bed design. It should also be understood that a variety of releasable hinge-mounting means could be employed and the particular means shown in Figs. 2 and 3 is only one preferred way of providing a releasable hinge-mounting means for the dual side-dumping feature of the invention. An alternative would be to use, for example, a normal door-type hinge arrangement with a hinge pin which could be removed from the hinge means on one side to dump to the other side. Removal of the pin would be either manual or automatic.

It should also be understood that various configurations could be utilized for the top and bottom hat arrangement. For example, the top and bottom hats could both be essentially semicircular in profile or could have a parabolic or hyperbolic shape.

It will thus be seen that this invention is not limited to the embodiments disclosed, in that numerous modifications could be made without departing from the scope of the invention as claimed in the following claims.

**Claims**

1. A material hauling conveyance having a dual side-dumping capability, and including a material containing bed (10) having a floor portion (11), outwardly inclined fixed side walls (12, 13) and front and rear wall portions (115, 116) and being devoid of opening side walls, conveyance means for transporting said bed including at least a pair of rear wheels (135) and a pair of front wheels (105) and a chassis assembly (70, 80) mounted on said wheels and having front and rear bed support assemblies to receive and support the bed on the chassis with the bed extending over both front and rear wheels on which the chassis assembly is mounted; at least a pair of hinge-mounting means (40A, 40B) located on opposite sides of said bed for enabling said bed to be tilted selectively to one or other side of the chassis around the rotation axis provided by the hinge-mounting means to dump material from the bed; and hoisting means (60A, 60B) mounted on said chassis assembly at the centre line of the bed for raising the bed to tilt it about a selected one of said hinge-mounting means for dumping material on the bed; characterised in that said chassis assembly includes separate front and rear bed support assemblies to accommodate certain movement with respect to each other whilst maintaining support of the bed independently of said hinge-mounting means and said hoisting means; in that said material containing bed (10) is a frameless construction, the floor (11) and side wall (12, 13) portions of said bed comprising sheet material extending continuously between the front and rear wall portions (115, 116); and in that hoisting means (60A, 60B) raises and tilts the bed to positions to one or other side of the chassis in which the centre of gravity of the bed lies beyond the hinge-mounting means with respect to the centre line of the chassis to effect dumping of material from the bed.

2. A conveyance as claimed in claim 1 characterised in that said profile of said floor portion (11) of said bed (10) comprises a section of an ellipse, a pair of said hinge-mounting means (40A, 40B) are located on each side of said bed (1) at front and rear corners of said floor portion, each of said hinge-mounting means comprising a hinge pin assembly (401, 402) mounted on said floor portion of said bed, a hinge saddle (410, 411), and a latch assembly (40C) each mounted on said chassis assembly (70, 80), said hinge pin assembly including a hinge pin (402) and a pin support bracket (401) fastened to said floor portion (11) of said bed for mounting said hinge pin parallel thereto and at a slight distance therefrom to define an axis of rotation generally intersected by the plane of an associated side portion (12, 13) of said bed, said hinge saddle including at least a pair of saddle brackets (410) adapted to cradle said pin, and said latch assembly including a latch bracket (430) fastened to said chassis assembly, a latch hook (431) rotatably mounted on said latch bracket to provide an engaged latch hook position for retaining said pin (402) in said saddle brackets (410) and a disengaged latch hook position in which said pin may be raised out of said saddle brackets, and means (432) for selectively moving said latch hook between said engaged and disengaged positions.

3. A conveyance as claimed in claim 1 or claim 2, characterised in that the conveyance includes a truck tractor (100) and a dolly-type trailer (130); said truck tractor including said pair of front wheels (105), and further comprising a truck frame (110) mounted to said front wheels and including a rearwardly extending stinger section (110A); said dolly-type trailer having said pair of rear wheels (135) and further including a trailer frame (130) mounted to said rear wheels and a reach (150) extending forward from said trailer frame and including a sliding pole compensator (155) mounted therein with a front end of said compensator pivotally mounted (160) to said stinger section of said truck frame; said chassis assembly comprises a front bunk assembly (20), means (22, 23, 71, 72) mounting said front bunk assembly in a horizontally rotatable manner on said truck frame (110), a bolster assembly (80) mounted on said trailer frame (130), a rear bunk assembly, and means mounting said rear bunk assembly (30) in a horizontally rotatable manner on said bolster assembly (80); said bed (10) having a pair of top hats (19A, 19B), each mounted on the bottom of one of said end wall portions (15, 16) thereof; and said front and rear bunk assemblies (20, 30) each having a bottom hat (21A) shaped to engage in mating fashion with one of said top hats; said hinge mounting means (40A, 40B) being positioned on each end of each of said bunk assemblies, whereby said bed is suspended between said front and rear bunk assemblies on said top hats, and said trailer is pulled by said bed and steered by said reach and compensator assembly to provide a tracking-cornering action between said truck tractor and said trailer and to enable said truck tractor and trailer combination to be jackknifed to the side opposite the side to be dumped toward to increase the safety factor while dumping.

4. A conveyance as claimed in claim 3, characterised in that said means for mounting said front bunk assembly (20) includes a bolster assembly (70) mounted to said frame (110) of said truck tractor, a cylindrical hub (71) carried on said bolster assembly, and a saucer (23) fastened in a central position on the underside of said front bunk assembly and mounted over said hub; said means for mounting said rear bunk (30) assembly includes a hub (70) fastened to said bolster assembly on said trailer frame and a saucer (23) fastened in a central position on the underside of said rear bunk assembly and mounted over said hub.

5. A conveyance as claimed in claim 3, characterised in that said means mounting said front bunk assembly (20) comprises a truck-trailer fifth wheel mounting arrangement, including a kingpin (205) and upper fifth wheel plate (200) mounted to the underside of said front bunk assembly and a blocked-up lower fifth wheel (210) fastened on said frame (110) of said truck tractor; and said rear bunk assembly (30) includes a hub (70) fastened to said bolster assembly (80) on said trailer frame (130) and a saucer (23) fastened in a central position on the underside of said rear bunk assembly and mounted over said hub.

6. A conveyance as claimed in any of claims 3 to 5 characterised in that said top hat (19A, 19B) and said bottom hat (21) each have an inverted V-shaped profile having complementary mating top and bottom surfaces, with a generally rounded top portion on each, said bottom hat (21) being mounted on a bunk plate (22) extending beyond the ends of said bottom hat; each of said hinge-mounting means (40A, 40B) comprising a hinge pin assembly (401, 402) mounted on said corner of said bottom portion of said bed (10), and a hinge saddle (410, 411) and a hinge latch assembly (40C) each mounted on said bunk plate (22) adjacent said ends of said bottom hat (21), said hinger pin assembly including a hinge pin (402) and a pin support bracket (401) fastened to said bottom portion (11) of said bed for mounting said hinge pin parallel thereto and at a slight distance therefrom to define an axis of rotation generally intersected by the plane of an associated side portion (12, 13) of said bed, said hinge saddle including at least a pair of saddle brackets (410) fastened on said bunk plate and adapted to cradle said pin, and said latch including a latch bracket (430) mounted on said bunk plate, a latch hook (431) rotatably mounted on said latch bracket to provide an engaged latch hook position for retaining said pin in said saddle brackets, and a disengaged latch hook position in which said pin may be raised out of said saddle brackets, and means (432) for selectively moving said latch hook between said engaged and disengaged positions.

7. A conveyance as claimed in claim 6, characterised in that said hinge pin assembly (401, 402) further includes a pair of bushings (405) mounted on said pin support bracket (401) and adapted to receive said pin (402) such that said support bracket and bushings rotate with respect to said pin when said bed is being tilted around the axis defined by said pin; said pin support bracket and bushings support said hinge pin at a horizontal position with its center line substantially coincident with the common apex of the bottom surface of said top hat (19A, 19B) and the top surface of said bottom hat (21) and said pin has a diameter such that its bottom surface is spaced from the mating surface of said saddle brackets when said top hats are resting on said bottom hats; and said means for selectively moving said latch (431) comprises an air-operated spring brake (432) mounted in a rotatable fashion to a portion of said latch bracket (430) extending underneath said bottom hat and connected to said latch hook for automatically moving said latch hook between said engaged and disengaged positions thereof.

8. A conveyance as claimed in any of claims 3 to 7, characterised in that said floor (11) and side wall portions (12, 13) of said bed (10) are shaped to a preselected profile, said floor portion (11) being shaped to have a profile consisting of a section of an ellipse and said side wall portions being substantially straight and extending away from the said break line (12A, 13A), where they intersect the respective ends of said elliptical section with said floor portion extending about two-thirds the overall width of said bed; and a baffle (70) is mounted about half-way between said end wall portions of said bed and has a profile substantially corresponding to the profile of said bed, said baffle being fastened to said side portions and said bottom portion of said bed to relieve tensile stresses on the central portions of the bottom floor of said bed and to distribute said stresses to the side walls thereof while precluding said side walls from pulling in when said bed is loaded with material.

9. A conveyance as claimed in any of the preceding claims, characterised in that said hoisting means comprises a double-acting hoist (60A, 60B) mounted on each end of said bed (10) with the bottom end of each cylinder of said hoists mounted in a rotatable fashion in a bracket (60A) fastened to said saucer (23) and the upper end of said piston mounted in a rotatable fashion to a bracket (65A) fastened on an associated end wall (15, 16) of said bed (10).

**Revendications**

1. Véhicule de transport de matériaux à double possibilité de déchargement latéral, comprenant un berceau (10) contenant des matériaux et possédant une partie de plancher (11), des parois latérales fixes (12, 13) inclinées vers l'extérieur et des parties de parois avant et arrière (115, 116), et étant dépourvu de parois latérales ouvertes, des moyens de transport pour le transport dudit berceau comprenant au moins une paire de roues arrière (135) et une paire de roues avant (105) et un ensemble châssis (70, 80) monté sur lesdites roues et comportant des ensembles de support de berceau avant et arrière destinés à recevoir et supporter le berceau sur le châssis, le berceau s'étendant au-dessus à la fois des roues avant et des roues arrière sur lesquelles l'ensemble châssis est monté; au moins une paire de moyens de montage à articulation (40A, 40B) disposés sur des côtés opposés dudit berceau pour permettre audit berceau d'être incliné sélectivement d'un côté ou de l'autre du châssis autour de l'axe de rotation établi par les moyens de montage à articulation pour décharger les matériaux du berceau; et des moyens de levage (60A, 60B) montés sur ledit ensemble châssis à l'axe central du berceau, afin d'élever le châssis pour l'incliner autour de l'un, choisi, desdits moyens de montage à articulation afin de décharger les matériaux du berceau; caractérisé en ce que ledit ensemble châssis comprend des ensembles supports de châssis séparés avant et arrière tolérant un certain mouvement de l'un par rapport à l'autre tout en continuant de supporter le berceau indépendamment desdits moyens de montage à articulation et des moyens de levage; en ce que ledit berceau (10) contenant des matériaux est d'une construction sans châssis, le plancher (11) et les parties de parois latérales (12, 13) dudit berceau comprenant de la tôle s'étendant en continu entre les parties de parois avant et arrière (115, 116); et en ce que les moyens de levage (60A, 60B) font monter et inclinent le berceau vers des positions situées sur un côté ou sur l'autre du châssis, dans lesquelles le centre de gravité du berceau est situé au-delà des moyens de montage à articulation par rapport à l'axe central du châssis afin de provoquer le déchargement des matériaux du berceau.

2. Véhicule de transport selon la revendication 1, caractérisé en ce que ledit profil de ladite partie de plancher (11) dudit berceau (10) comprend une section d'ellipse, une paire desdits moyens de montage à articulation (40A, 40B) est située de chaque côté dudit berceau (1) à des angles avant et arrière de ladite partie de fond, chacun desdits moyens de montage à articulation comprenant un ensemble à broche d'articulation (401, 402) monté sur ladite partie de plancher dudit berceau, une selle d'articulation (410, 411), et un ensemble de verrouillage (40C) montés chacun sur ledit ensemble châssis (70, 80), ledit ensemble à broche d'articulation comprenant une broche d'articulation (402) et une console (401) de support de broche fixée à ladite partie de plancher (11) dudit berceau pour le montage de ladite broche d'articulation parallèlement à celle-ci et à peu de distance de celle-ci afin de définir un axe de rotation coupé globalement par le plan d'une partie latérale associée (12, 13) dudit berceau, ladite selle d'articulation comprenant au moins une paire de consoles (410) de selle conçues pour loger ladite broche, et ledit ensemble de verrouillage comprenant une console (430) de verrouillage fixée audit ensemble châssis, un crochet (431) de verrouillage monté de façon à tourner sur ladite console de verrouillage pour prendre une position de crochet de verrouillage engagée pour retenir ladite broche (402) dans lesdites consoles de selle (410) et une position de crochet de verrouillage dégagé dans laquelle ladite broche peut être soulevée desdites consoles de selle, et des moyens (432) destinés à déplacer sélectivement ledit crochet de verrouillage entre lesdites positions engagée et dégagée.

3. Véhicule de transport selon la revendication 1 ou la revendication 2, caractérisé en ce que le véhicule de transport comprend un tracteur routier (100) et une remorque (130) du type diabolo, ledit tracteur routier comprenant ladite paire de roues avant (105), et comprenant en outre un châssis (110) de camion monté sur lesdites roues avant et comportant une partie en pointe (110A) s'étendant vers l'arrière; ladite remorque du type diabolo comportant ladite paire de roues arrière (135) et comprenant en outre un châssis (130) de remorque monté sur lesdites roues arrière et un timon (150) s'étendant vers l'avant dudit châssis de remorque et renfermant un compensateur à flèche coulissante (155), une extrémité avant dudit compensateur étant montée de façon pivotante (160) sur ladite partie en pointe dudit châssis de camion; ledit ensemble de châssis comprenant un ensemble à appui avant (20), des moyens (22, 23, 71, 72) montant ledit ensemble à appui avant d'une manière lui permettant de tourner horizontalement sur ledit châssis de camion (110), un ensemble (80) à traverse de charge monté sur ledit châssis de remorque (130), un ensemble à appui arrière et des moyens de montage dudit ensemble (30) à appui arrière d'une manière lui permettant de tourner horizontalement sur ledit ensemble à traverse de charge (80); ledit berceau (10) comportant une paire de chapeaux supérieurs (19A, 19B) montés chacun sur le bas de l'une de ses parties de parois extrêmes (15, 16); et lesdits ensembles à appuis avant et arrière (20, 30) comportant chacun un chapeau inférieur (21A) configuré pour s'enclencher de façon complémentaire avec l'un desdits chapeaux supérieurs; lesdits moyens de montage à articulation (40A, 40B) étant positionnés sur chaque extrémité de chacun desdits ensembles à appui, de manière que ledit berceau soit suspendu entre lesdits ensembles à logement avant et arrière sur lesdits chapeaux supérieurs, et que ladite remorque soit tractée par ledit berceau et dirigée par ledit ensemble à timon et compensateur pour produire une action de guidage-virage entre ledit tracteur routier et ladite remorque et de permettre audit ensemble à tracteur routier et remorque d'être plié vers le côté opposé au côté à décharger en vue d'accroître le facteur de sécurité pendant le déchargement.

4. Véhicule de transport selon la revendication 3, caractérisé en ce que lesdits moyens de montage dudit ensemble à appui avant (20) comprennent un ensemble à traverse de charge (70) monté sur ledit châssis (110) dudit tracteur routier, un moyeu cylindrique (71) porté par ledit ensemble à traverse de charge, et une soucoupe (23) fixée dans une position centrale sur la face inférieure dudit ensemble à appui avant et montée au-dessus dudit moyeu, lesdits moyens de montage dudit ensemble (30) à appui arrière comprennent un moyeu (70) fixé audit ensemble à traverse de charge situé sur ledit châssis de remorque et une soucoupe (23) fixée dans une position centrale sur la face inférieure dudit ensemble à appui arrière et montée au-dessus dudit moyeu.

5. Véhicule de transport selon la revendication 3, caractérisé en ce que lesdits moyens de montage dudit ensemble (20) à appui avant comprennent un agencement de montage de sellette d'ensemble camion-remorque comprenant un pivot d'attelage (205) et un plateau supérieur (200) de sellette monté sur la face inférieure dudit ensemble à appui avant et une sellette inférieure calée (210) fixée sur ledit châssis (110) dudit tracteur routier; et ledit ensemble à appui arrière (30) comprend un moyeu (70) fixé audit ensemble (80) à traverse de charge sur ledit châssis (130) de remorque et une soucoupe (23) fixée dans une position centrale sur la face inférieure dudit ensemble à appui arrière et montée au-dessus dudit moyeu.

6. Véhicule de transport selon l'une quelconque des revendications 3 à 5, caractérisé en ce que ledit chapeau supérieur (19A, 19B) et ledit chapeau inférieur (21) présentent chacun un profil en forme de V retourné comprenant des surfaces supérieure et inférieure complémentaires d'accouplement, ayant chacune une partie supérieure globalement arrondie, ledit chapeau inférieur (21) étant monté sur une plaque (22) d'appui s'étendant au-delà des extrémités dudit chapeau inférieur; chacun desdits moyens de montage d'articulation (40A, 40B) comprenant un ensemble (401, 402) à broche d'articulation monté sur ledit angle de ladite partie inférieure dudit berceau (10), et une selle (410, 411) d'articulation et un ensemble (40C) de verrouillage d'articulation montés chacun sur ladite plaque d'appui (22) à proximité immédiate desdites extrémités dudit chapeau inférieur (21), ledit ensemble à broche d'articulation comprenant une broche d'articulation (402) et une console (401) de support de broche fixée à ladite partie inférieure (11) dudit berceau pour le montage de ladite broche d'articulation parallèlement à celle-ci et à peu de distance de celle-ci afin de définir un axe de rotation globalement intersecté par le plan d'une partie latérale associée (12, 13) dudit berceau, ladite selle d'articulation comprenant au moins une paire de consoles de selle (410) fixées à ladite plaque d'appui et conçues pour loger ladite broche, et ledit verrou comprenant une console (430) de verrou montée sur ladite plaque d'appui, un crochet (131) de verrou monté de façon à pouvoir tourner sur ladite console de verrou afin de prendre une position de crochet de verrou engagée pour retenir ladite broche dans lesdites consoles de selle, et une position de crochet de verrou dégagée dans laquelle ladite broche peut être soulevée desdites consoles de selle, et des moyens (432) destinés à déplacer sélectivement ledit crochet de verrou entre lesdites positions engagée et dégagée.

7. Véhicule de transport selon la revendication 6, caractérisé en ce que ledit ensemble (401, 402) à broche d'articulation comprend en outre une paire de douilles (405) montées sur ladite console (401) de support de broche et conçues pour recevoir ladite broche (402) de manière que ladite console de support et lesdites douilles tournent par rapport à ladite broche pendant que ledit berceau exécute un mouvement d'inclinaison autour de l'axe défini par ladite broche; ladite console de support de broche et lesdites douilles supportent ladite broche d'articulation dans une position horizontale, son axe central coïncidant sensiblement avec le sommet commun de la surface inférieure dudit chapeau supérieur (19A, 19B) et de la surface supérieure dudit chapeau inférieur (21) et ladite broche présente un diamètre tel que sa surface inférieure est espacée de la surface complémentaire desdites consoles de selle lorsque lesdits chapeaux supérieurs reposent sur lesdits chapeaux inférieurs; et lesdits moyens destinés à déplacer sélectivement ledit verrou (431) comprennent un frein à ressort (432) actionné par air monté de manière à pouvoir tourner sur une partie de ladite console de verrou (430) s'étendant au-dessous dudit chapeau inférieur et relié audit crochet de verrou pour déplacer automatiquement ledit crochet de verrou entre ses positions engagée et dégagée.

8. Véhicule de transport selon l'une quelconque des revendications 3 à 7, caractérisé en ce que ledit plancher (11) et lesdites parties de parois latérales (12, 13) dudit berceau (10) sont configurés suivant un profil préalablement choisi, ladite partie de plancher (11) étant configurée de façon à avoir un profil constituant une section d'une ellipse et lesdites parties de parois latérales étant sensiblement droites et s'éloignant de ladite ligne de rupture (12A, 13A) où elles intersectent les extrémités respectives de ladite section elliptique, ladite partie de plancher s'étendant sur environ deux tiers de la largeur globale dudit berceau; et un déflecteur (70) est monté sensiblement à midistance entre lesdites parties de parois extrêmes dudit berceau et présente un profil correspondant sensiblement au profil dudit berceau, ledit déflecteur étant fixé auxdites parties latérales et à ladite partie de fond dudit berceau pour éliminer les efforts de traction imposés aux parties centrales du plancher de fond dudit berceau et pour répartir lesdits efforts vers ses parois latérales tout en empêchant lesdites parois latérales d'être tirées vers l'intérieur lorsque ledit berceau est chargé de matériaux.

9. Véhicule de transport selon l'une quelconque des revendications précédentes, caractérisé en ce que lesdits moyens de levage comprennent un élévateur (60A, 60B) à double action monté sur chaque extrémité dudit berceau (10), l'extrémité inférieure de chaque cylindre desdits élévateurs étant montée d'une manière à pouvoir tourner dans une console (60A) fixée à ladite soucoupe (23) et l'extrémité supérieure dudit piston étant montée d'une manière à pouvoir tourner sur une console (65A) fixée sur une paroi extrême associée (15, 16) dudit berceau (10).

**Patentansprüche**

1. Materialtransportfahrzeug, welches für ein doppelseitiges Abkippen geeignet ist, mit einem Material enthaltenden Ladebett (10), das einen Bodenabschnitt (11), nach außen geneigte feste Seitenwände (12, 13) und vordere und hintere Wandabschnitte (115, 116) aufweist und frei von sich öffnenden Seitenwänden ist, mit Fahrzeugeinrichtungen zum Transportieren des Ladebetts, welche wenigstens ein Paar von Hinterrädern (135) und ein Paar von Vorderrädern (105) sowie eine Chassisanordnung (70, 80) aufweisen, die auf den Rädern angeordnet ist und vordere und hintere Ladebetttraganordnungen aufweist, um das Ladebett auf dem Chassis aufzunehmen und abzustützen, wobei sich das Ladebett sowohl über die Vorderrader als auch die Hinterräder erstreckt, auf denen die Chassisanordnung angeordnet ist, mit wenigstens einem Paar von Scharnierhalteeinrichtungen (40A, 40B), die auf gegenüberliegenden Seiten des Ladebetts angeordnet sind, damit das Ladebett selektiv zu der einen oder der anderen Seite des Chassis um die Drehachse gekippt werden kann, die von den Scharnierhalteeinrichtungen gebildet werden, um das Material aus dem Ladebett auszukippen, und mit an der Chassisanordnung auf der Mittellinie des Ladebetts angeordnete Hubeinrichtungen (60A, 60B), um das Ladebett um eine ausgewählte Scharnierhalteeinrichtung der Scharnierhalteeinrichtungen zu kippen, um das Material auf dem Ladebett auszukippen, dadurch gekennzeichnet, daß die Chassisanordnung getrennte vordere und hintere Ladebettabstützanordnungen aufweist, um eine bestimmte Bewegung bezüglich einander auszugleichen, wahrend die Abstützung des Ladebetts unabhängig von den Scharnierhalteeinrichtungen und den Hubeinrichtungen gehalten werden, daß das Material enthaltende Ladebett (10) eine rahmenlose Konstruktion ist, wobei die Bodenabschnitte (11) und die Seitenwandabschnitte (12, 13) des Ladebetts Plattenmaterial aufweist, das sich fortlaufend zwischen dem Vorderwand- und Hinterwandabschnitt (115, 116) erstreckt, und daß die Hubeinrichtungen (60A, 60B) das Ladebett in Positionen zu der einen oder anderen Seite des Chassis anhebt und kippt, in denen der Schwerpunkt des Ladebetts jenseits der Scharnierhalteeinrichtungen bezogen auf die Mittellinie des Chassis liegt, um das Auskippen des Materials aus dem Ladebett zu bewirken.

2. Fahrzeug nach Anspruch 1, dadurch gekennzeichnet, daß das Profil des Bodenabschnitts (11) des Ladebetts (10) einen Ellipsenabschnitt aufweist, daß ein Paar der Scharnierhalteeinrichtungen (40A, 40B) auf jeder Seite des Ladebetts (1) an der vorderen und hinteren Kante des Bodenabschnitts angeordnet ist, daß jede der Scharnierhalteeinrichtungen eine Scharnierzapfenanordnung (401, 402), die an dem Bodenabschnitt des Ladebetts angebracht ist, einen Scharniersattel (410, 411) und eine Arretieranordnung (40C) aufweist, die jeweils an der Chassisanordnung (70, 80) angebracht sind, wobei die Scharnierzapfenanordnung einen Scharnierzapfen (402) und einen Zapfenstützhalter (401) aufweist, der an dem Bodenabschnitt (11) des Ladebettes zum Halten des Scharnierzapfens parallel dazu und in einem geringen Abstand davon festgelegt ist, um eine Drehachse zu bilden, die insgesamt von der Ebene eines zugeordneten Seitenabschnitts (12, 13) des Ladebetts geschnitten wird, der Scharniersattel wenigstens ein Paar von Sattelträgern (410) für die Aufnahme des Zapfens aufweist und die Arretieranordnung einen an der Chassisanordnung festgelegten Arretierträger (430), einen drehbar an dem Arretierträger angebrachten Arretierhaken (431), damit eine Arreiterhakeneingriffsstellung zum Halten des Zapfens (402) in den Sattelträgern (410) und eine Arretierhakenfreigabestellung herbeigeführt werden kann, in der der Zapfen aus den Sattelträgern herausgehoben werden kann, und Einrichtungen (432) aufweist, um den Arreiterhaken wahlweise zwischen der Eingriffsstellung und der Freigabestellung zu bewegen.

3. Fahrzeug nach Anspruch 1 oder 2, dadurch gekennzeichnet, daß es einen Sattelschlepper (100) und einen Anhänger (130) in Drehgestellbauweise aufweist, daß der Sattelschlepper das Paar von Vorderrädern (105) und weiterhin einen Drehgestellrahmen (110) aufweist, der an den Vorderrädern angebracht ist und einen sich nach rückwärts erstreckenden stachelartigen Abschnitt (110A) hat, daß der Anhänger in Drehgestellbauweise das Paar von Hinterrädern (135) und weiterhin einen an den Hinterrädern angebrachten Anhängerrahmen (130) und eine Deichsel (150) aufweist, die sich von dem Anhängerrahmen nach vorne erstreckt und einen gleitend verschiebbaren Längenkompensator (155) aufweist, der darin angeordnet ist, wobei ein vorderes Ende des Kompensators schwenkbar (160) an dem stachelförmigen Abschnitt des Drehgestellrahmens angebracht ist, daß die Chassisanordnung eine vordere Querbaumanordnung (20), Einrichtungen (22, 23, 71, 72), die die vordere Querbaumanordnung in einer horizontal drehbaren Weise an dem Drehgestellrahmen (110) halten, eine Wiegenanordnung (80), die an dem Anhängerrahmen (130) angebracht ist, eine hintere Querbaumanordnung und Einrichtungen aufweist, die die hintere Querbaumanordnung (30) in einer horizontal drehbaren Weise an der Wiegenanordnung (80) halten, daß das Ladebett (10) ein Paar von oberen Hüten (19A, 19B) aufweist, von denen jeder am Boden eines seiner Stirnwandabschnitte (15, 16) angebracht ist, daß die vordere Querbaum- und hintere Querbaumanordnung (20, 30) jeweils einen unteren Hut (21A) hat, der für den passenden Eingriff mit einem der oberen Hüte geformt ist, daß die Scharnierhalteeinrichtungen (40A, 40B) an jedem Ende einer jeden Querbaumanordnung positioniert sind, wodurch das Ladebett zwischen der vorderen und hinteren Querbaumanordnung auf den oberen Hüten aufgehängt ist, und daß der Anhänger von dem Ladebett gezogen und von der Gabel- und Kompensatoranordnung so gesteuert wird, daß zwischen dem Sattelschlepper und dem Anhänger eine Nachführkurvenfahrt erreicht wird die Kombination aus Schlepper und Anhänger zu der Seite zusammengeklappt werden kann, die der Seite gegenüberliegt, zu der ausgekippt werden soll, um dadurch den Sicherheitsfaktor beim Auskippen zu erhöhen.

4. Fahrzeug nach Anspruch 3, dadurch gekennzeichnet, daß die Einrichtungen zum Halten der vorderen Querbaumanordnung (20) eine Wiegenanordnung (70), die an dem Rahmen (110) des Sattelschleppers angebracht ist, eine zylindrische Nabe (71), die auf der Wiegenanordnung getragen wird, und einen Unterteller (23) aufweist, der in einer zentralen Position an der Unterseite der vorderen Querbaumanordnung festgelegt und über der Nabe angebracht ist, wobei die Einrichtungen zum Halten der hinteren Querbaumanordnung (30) eine Nabe (70), die an der Wiegenanordnung des Anhängerrahmens festgelegt ist, und einen Unterteller (23) aufweist, der in einer zentralen Position an der Unterseite der hinteren Querbaumanordnung festgelegt und über der Nabe angebracht ist.

5. Fahrzeug nach Anspruch 3, dadurch gekennzeichnet, daß die Einrichtung zum Halten der vorderen Querbaumanordnung (20) eine Zugfahrzeug-Anhänger-Aufsattelhalteanordnung mit einem Drehzapfen (205) und einer oberen Aufsattelplatte (200), die an der Unterseite der vorderen Querbaumanordnung angebracht ist, und eine abgestützte untere Aufsattelung (210) aufweist, die an dem Rahmen (110) des Sattelschleppers festgelegt ist, und daß die hintere Querbaumanordnung (30) eine Nabe (70), die an der Wiegenanordnung (80) an dem Anhängerrahmen (130) festgelegt ist, und einen Unterteller (23) aufweist, der in einer zentralen Position an der Unterseite der hinteren Querbaumanordnung festgelegt und über der Nabe angebracht ist.

6. Fahrzeug nach einem der Ansprüche 3 bis 5, dadurch gekennzeichnet, daß der obere Hut (19A, 19B) und der untere Hut (21) jeweils ein Profil in Form eines umgekehrten V mit komplementären, aufeinanderpassenden oberen und unteren Flächen und mit einem insgesamt abgerundeten oberen Abschnitt an jedem aufweisen, daß der untere Hut (21) an einer Querbaumplatte (22) angebracht ist, die sich über die Enden des unteren Huts hinaus erstreckt, daß jede der Scharnierhalteeinrichtungen (40A, 40B) eine Scharnierzapfenanordnung (401, 402), die an der Kante des unteren Abschnitts des Ladebetts (10) angebracht ist, einen Scharniersattel (410, 411) und eine Scharnierarretieranordnung (40C) aufweist, von denen jede an der Querbaumplatte (22) angrenzend an die Enden des unteren Huts (21) angebracht ist, daß die Scharnierzapfenanordnung einen Scharnierzapfen (402) und einen Zapfenstützhalter (401) aufweist, der an dem unteren Abschnitt (11) des Ladebettes zum Halten des Scharnierzapfens parallel dazu und in einem geringen Abstand davon festgelegt ist, um eine Drehachse zu bilden, die insgesamt von der Ebene eines zugeordneten Seitenabschnitts (12, 13) des Ladebetts geschnitten wird, daß der Scharniersattel wenigstens ein Paar von Satielträgern (410) aufweist, die an der Querbaumplatte festgelegt sind und für die Aufnahme des Zapfens dienen, und daß die Arretierung einen Arretierträger (430), der an der Querbaumplatte angebracht ist, einen Arretierhaken (431), der drehbar an dem Arretierträger angebracht ist und eine Arretierhakeneingriffsstellung zum Halten des Zapfens in den Satielträgern und eine Arretierhakenfreigabestellung ermöglicht, in welcher der Zapfen aus den Satielträgern herausgehoben werden kann, und Einrichtungen (432) zum wahlweisen Bewegen des Arretierhakens zwischen der Eingriffsstellung und der Freigabestellung aufweist.

7. Fahrzeug nach Anspruch 6, dadurch gekennzeichnet, daß die Scharnierzapfenanordnung (401, 402) weiterhin ein Paar von Büchsen (405) aufweist, die an dem Zapfenstützträger (401) angebracht sind und für die Aufnahme des Zapfens (402) ausgelegt sind, so daß der Stützträger und die Büchsen sich bezüglich des Zapfens drehen, wenn das Ladebett um die von dem Zapfen gebildete Achse gekippt wird, daß der Zapfenstützträger und die Büchsen den Scharnierzapfen in einer horizontalen Lage abstützen, in der seine Mittellinie im wesentlichen mit dem gemeinsamen Scheitel der Bodenfläche des oberen Huts (19A, 19B) und der Unterseite des unteren Huts (21) zusammenfällt, und daß der Zapfen einen solchen Durchmesser hat, daß seine Unterseite sich im Abstand von der Anpassungsfläche der Sattelträger befindet, wenn die oberen Hüte auf den unteren Hüten ruhen, und daß die Einrichtungen zum wahlweisen Bewegen der Arretierung (431) eine luftbetätigte Federbremse (432) aufweisen, die in drehbarer Weise an einem Abschnitt des Arretierträgers (430) angebracht ist, der sich unter dem unteren Hut erstreckt und mit dem Arretierhaken für eine automatische Bewegung des Arretierhakens zwischen seiner Eingriffsstellung und seiner Freigabestellung verbunden ist.

8. Fahrzeug nach einem der Ansprüche 3 bis 7, dadurch gekennzeichnet, daß der Bodenabschnitt (11) und die Seitenwandabschnitte (12, 13) des Ladebetts (10) in einem vorgewählten Profil geformt sind, daß der Bodenabschnitt (11) aus einem Profil geformt ist, das aus einem Ellipsenabschnitt besteht, während die Seitenwandabschnitte im wesentlichen gerade sind und sich von der Unterbrechungslinie (12A, 13A) aus weg erstrecken, wo sie die jeweiligen Enden des elliptischen Abschnitts schneiden, wobei sich der Bodenabschnitt über etwa zwei Drittel der Gesamtbreite des Ladebetts erstreckt, und daß die Leitplatte (70) auf etwa halbem Weg zwischen den Stirnwandabschnitten des Ladebetts angebracht ist und ein Profil hat, das im wesentlichen dem Profil des Ladebetts entspricht, wobei die Leitplatte an den Seitenabschnitten und dem Bodenabschnitt des Ladebetts festgelegt ist, um Zuspannungen an den zentralen Abschnitten des unteren Bodens des Ladebetts freizusetzen und um die Spannungen auf seine Seitenwände zu verteilen, während ausgeschlossen wird, daß die Seitenwände eingezogen werden, wenn das Ladebett mit Material beladen wird.

9. Fahrzeug nach einem der vorhergehenden Ansprüche, dadurch gekennzeichnet, daß die Hubeinrichtungen ein doppelt wirkendes Hebezeug (60A, 60B) aufweisen, das an jedem Ende des Ladebetts (10) angeordnet ist, wobei das untere Ende eines jeden Zylinders der Hebezeuge in drehbarer Weise in einem Träger (60A) angebracht ist, der an dem Unterteller (23) festgelegt ist, und das obere Ende des Kolbens in drehbarer Weise an einem Träger (65A) angebracht ist, der an einer zugehörigen Stirnwand (15, 16) des Ladebetts (10) festgelegt ist.

FIG. —1

0 034 032

0 034 032

FIG. — 2

FIG. — 3

FIG.—4

FIG.—5

FIG. —6

FIG. —7

0 034 032

FIG.—8

FIG.—9

FIG.—10

5

0    6"    12"    18"    24"    30" 32"    42"    47 1/2"

10 1/2"

36.84" CENTER LINE OF BED

36.55"

35.71"

34.24"

32.02"

28.38"

27.36"

10

FIG.—11

8"

2 5/8"

3 1/2"

5"

7 1/4"

10 1/16"

7 1/2"

2 1/2"

22

51" FROM BUNK PLATE TO GROUND

FIG.—12